# EUROPÄISCHE PATENTANMELDUNG

(11) **EP 1 747 924 A2**
(43) Veröffentlichungstag der Anmeldung: **31.01.2007**
(21) Anmeldenummer: 06010443.7
(22) Anmeldetag: 20.05.2006
(51) Int. Cl.: B60J 5/06

(54) **Einrichtung zum Festlegen einer Runge im Bereich eines Nutzfahrzeugaufbaus**

(30) Priorität: 16.07.2005 DE 102005033319
(71) Anmelder: F. HESTERBERG & SÖHNE GmbH & Co. KG, 58256 Ennepetal (DE)
(72) Erfinder: Tiedtke, Henning, 58256 Ennepetal (DE); Feinbier, Joachim, 58256 Ennepetal (DE); Breme, Stefan, 58339 Breckerfeld (DE); Migchliesen, Bernhard, 58256 Ennepetal (DE)
(74) Vertreter: Döpp, Ludger

(57) **Zusammenfassung**

Einrichtung zum Festlegen einer, insbesondere verschiebbar ausgebildeten Runge (1), im Bereich eines Nutzfahrzeugaufbaus, zumindest beinhaltend ein Rungenprofil (2), eine, insbesondere als Handhebel ausgebildete, Verstelleinrichtung (7), die über einen Kniehebel (8) mit dem Rungenprofil (2), respektive einer damit verbundenen Profilverstärkung (16) in Wirkverbindung steht sowie ein am Rahmenbereich (5) des Nutzfahrzeugaufbaus befestigtes Rungenlager (6), im Bereich dessen ein freies Ende (15) der Verstelleinrichtung (7) zur Erzeugung unterschiedlicher Hubstellungen der Runge (1) in unterschiedlichen Positionen (15',15'') einbringbar ist.

## Beschreibung

Die Erfindung betrifft eine Einrichtung zum Festlegen einer, insbesondere verschiebbar ausgebildeten, Runge im Bereich eines Nutzfahrzeugaufbaus.

Nutzfahrzeugaufbauten beinhalten üblicherweise einen äußeren Rahmenbereich, auf weichem stationäre und relativ zum Nutzfahrzeugaufbau verschiebbare Rungen positioniert sind, die das Dach des Nutzfahrzeugaufbaus tragen. Zur Erzeugung von Öffnungen im Bereich des Dachaufbaus müssen verschiebbare Rungen vorgesehen werden, die im geschlossenen Zustand des Dachaufbaus relativ zum Rahmen festzulegen sind.

Ziel des Erfindungsgegenstandes ist es, eine Einrichtung zum Festlegen einer, insbesondere verschiebbar ausgebildeten, Runge im Bereich eines Nutzfahrzeugaufbaus bereit zu stellen, die einfach und kostengünsfig herstellbar ist und mit einfachen Mitteln in verriegelnder bzw. entriegelnder Weise mit dem Rahmen des Nutzfahrzeugaufbaus in Wirkverbindung bringbar ist.

Dieses Ziel wird erreicht durch eine Einrichtung zum Festlegen einer, insbesondere verschiebbar ausgebildeten Runge im Bereich eines Nutzfahrzeugaufbaus, zumindest beinhaltend ein Rungenprofil, eine, insbesondere als Handhebel ausgebildete, Verstelleinrichtung, die über einen Kniehebel mit dem Rungenprofil, respektive einer damit verbundenen Profilverstärkung in Wirkverbindung steht sowie ein am Rahmenbereich des Nutzfahrzeugaufbaus befestigtes Rungenlager, im Bereich dessen ein freies Ende der Verstelleinrichtung zur Erzeugung unterschiedlicher Hubstellungen der Runge in unterschiedlichen Positionen einbringbar ist.

Vorteilhafte Weiterbildungen des Erfindungsgegenstandes sind den Unteransprüchen zu entnehmen.

Durch die nach Art eines Knipphebels ausgebildete Verstelleinrichtung kann das Rungenprofil in entriegelnder bzw. verriegelnder Weise angehoben und abgesenkt werden, wodurch im Verriegelungszustand eine Festlegung der Runge relativ zum Nutzfahrzeugaufbau gegeben ist. Das Rungenlager ist vorteilhafterweise mit mehreren Aufnahmebereichen für am Rungenprofil, respektive der damit in Wirkverbindung stehenden Profilverstärkung, vorgesehene Lagerbolzen ausgerüstet. Sobald die oberen und unteren Lagerbolzen den jeweiligen Aufnahmebereich des Rungenlagers verlassen haben, kann die Runge aus dem Bereich des Rungenlagers heraus geschwenkt und relativ zum Nutzfahrzeugaufbau verschoben werden, wodurch dachseitig benötigte Öffnungsbereiche erzeugt werden können. Die Runge ist vorteilhafterweise als verschiebbare Curtainsiderrunge ausgebildet und trägt im Bereich ihres oberen Endes den Dachaufbau. Zum Verriegeln, d.h. Festlegen der Runge relativ zum Nutzfahrzeugaufbau, werden die vorab beschriebenen Schritte in umgekehrter Richtung durchlaufen.

Der Erfindungsgegenstand ist anhand eines Ausführungsbeispiels in der Zeichnung dargestellt und wird wie folgt beschrieben. Es zeigen:
- Figur 1: Prinzipskizze der erfindungsgemäßen Einrichtung;
- Figuren 2 bis 4: Unterschiedliche Hubstellungen der Einrichtung gemäß Figur 1;
- Figur 5: Schnitt durch das Rungenlager,
- Figur 6: Räumliche Darstellung des Rungenlagers.

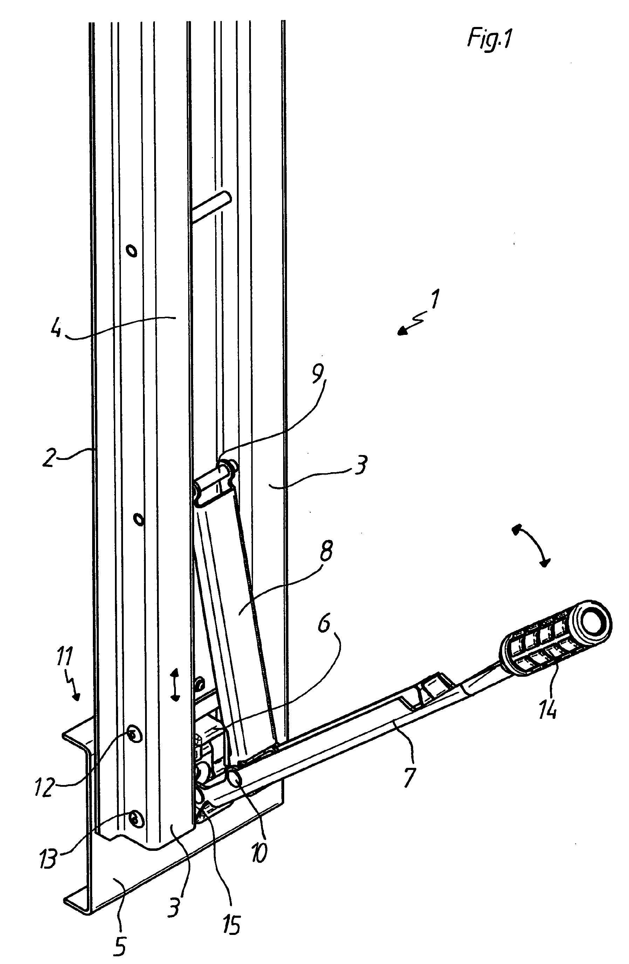

Figur 1 zeigt als Prinzipskizze die erfindungsgemäße Einrichtung zum Festlegen einer, in diesem Beispiel verschiebbar ausgebildeten, Runge 1 im Bereich eines nicht weiter dargestellten Nutzfahrzeugaufbaus. Die Runge 1 wird in diesem Beispiel gebildet durch ein im Querschnitt M-förmiges Rungenprofil 2, beinhaltend erhabene Bereiche 3 sowie einen dazwischen liegenden vertieften Bereich 4.

Lediglich angedeutet ist ein im Bereich des Nutzfahrzeugaufbaus befestigter Rahmenbereich 5, im Bereich dessen ein Rungenlager 6 vorgesehen ist. Zum Verriegeln/Entriegeln der Runge 1 ist eine, in diesem Beispiel als Handhebel ausgebildete, Verstelleinrichtung 7 vorgesehen, die über einen Kniehebel 8 mit dem Rungenprofil 2 verbunden ist. Vorgesehen sind durch Bolzen 9,10 gebildete Schwenkbereiche des Kniehebels 8. Im unteren Bereich 11 weist das Rungenprofil 2 Verriegelungsbolzen 12,13 auf, deren Funktion hier nicht erkennbar ist und in den Folgefiguren näher beschrieben wird. Der Handhebel 7 verfügt über einen Handgriff 14 und ist in Pfeilrichtung auf das Rungenprofil 2 zu bzw. davon weg schwenkbar vorgesehen. Das freie untere Ende 15 des Handhebels 7 ist, wie auch später näher beschrieben, in verschiedenen Positionen rungenlagerseitig abstützbar, so dass ein die Runge 1 in anhebender bzw. absenkender Weise herbeiführbarer Bewegungsablauf über den Kniehebel 8 herbeiführbar ist.

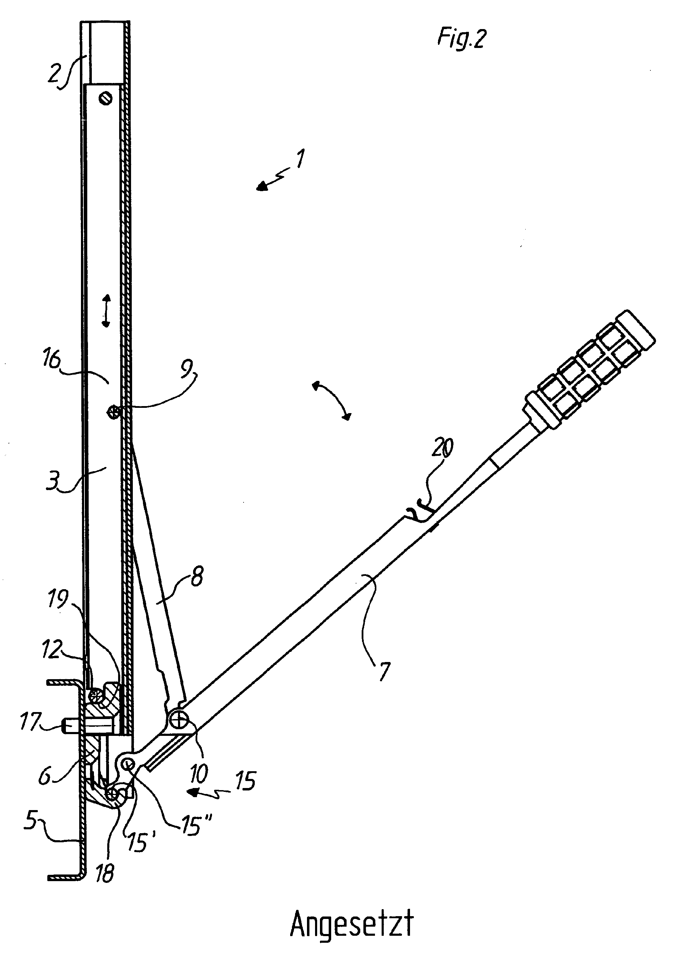

Die Figuren 2 bis 4 zeigen unterschiedliche Schwenkstellungen des Handhebels 7 relativ zum Rungenprofil 2, respektive einer damit zusammenwirkenden, im Querschnitt ebenfalls M-förmig ausgebildeten Profilverstärkung 16. Erkennbar ist in diesem Schnitt der Rahmenbereich 5, das über Schrauben 17 mit dem Rahmenbereich 5 verbundene Rungenlager 6, der Kniehebel 8, die Bolzen 9,10 sowie der obere Lagerbolzen 12.

Das untere freie Ende 15 des Handhebels 7 ist mit einem Öffnungs-/Schließbolzen 15' sowie einem Parkbolzen 15" versehen, wobei der Bolzen 15' in einem unteren Lagerbereich 18 des Rungenlagers 6 angesetzt ist. Der obere Verriegelungsbolzen 12 ist in dieser Position noch im oberen Verriegelungsbereich 19 des Rungenlagers 6 positioniert. Im Verlauf seiner Erstreckung weist der Handhebel 7 ein klammerartig ausgebildetes Sicherungselement 20 auf, das im verriegelten Zustand der Runge 1 mit dem, sich zwischen den erhabenen Bereichen 3 der Profilverstärkung 16 erstreckenden Bolzen 9 in Wirkverbindung steht.

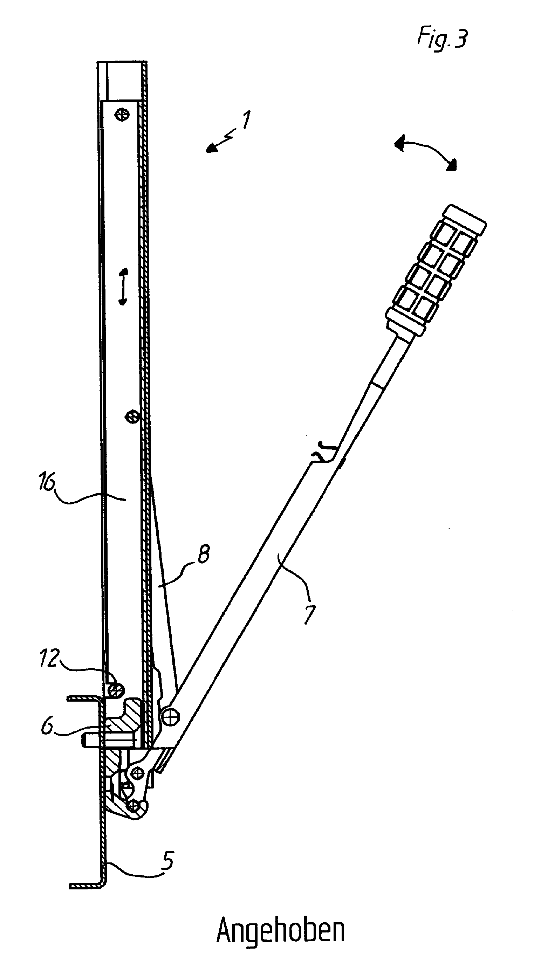

Figur 3 zeigt den Handhebel 7 in weiter relativ zur Runge 1 eingeschwenkter Position. Erkennbar ist, dass über den Kniehebel 8 der obere Verriegelungsbolzen 12, respektive die Profilverstärkung 16, angehoben ist. Gleiches gilt für die hier nicht erkennbaren unteren Verriegelungsbolzen 13 (Figur 1). Sobald die Verriegelungsbolzen 12,13 frei sind, d.h. nicht mehr mit dem Rungenlager 6 in Wirkverbindung stehen, kann die Runge 1 aus dem Bereich des Rungenlagers 6 heraus geschwenkt und relativ zum Nutzfahrzeugaufbau verschoben werden. Gleiches gilt in umgekehrter Weise bezüglich der Festlegung der Runge 1 relativ zum Rahmenbereich 5 des Nutzfahrzeugaufbaus.

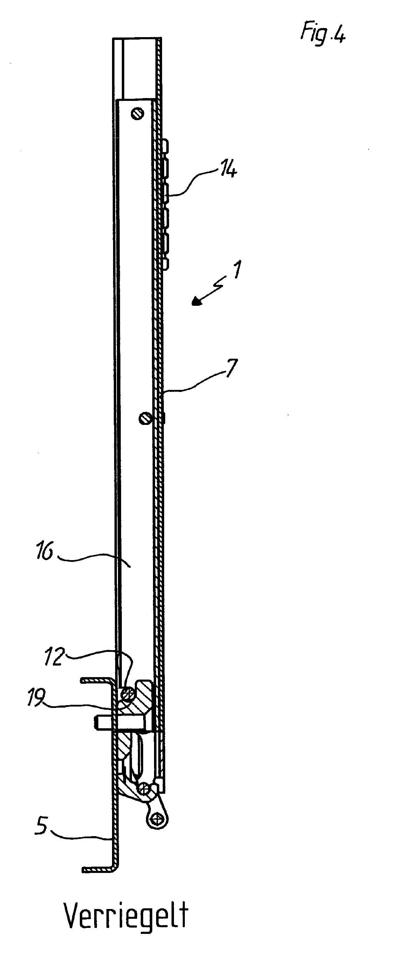

Figur 4 zeigt den verriegelten Zustand der Runge 1 relativ zum Rahmenbereich 5. Der Handhebel 7 ist in dieser Position parallel zur Profilverstärkung 16 der Runge 1 vorgesehen. Erkennbar ist lediglich der Handgriff 14 sowie der obere Verriegelungsbolzen 12 erkennbar, der im Lagerbereich 19 positioniert ist.

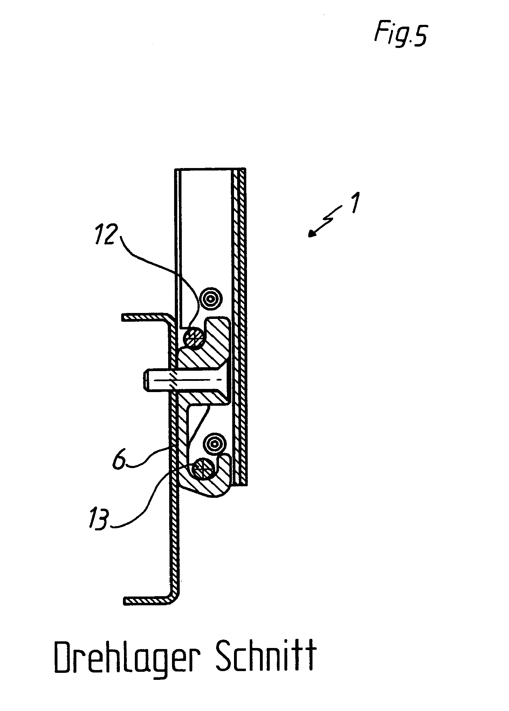

Figur 5 zeigt einen anderen Querschnitt durch das Rungenlager 6. Erkennbar sind die Verriegelungsbolzen 12,13, und zwar im verriegelten Zustand der Runge 1. Dieser Zustand entspricht im Wesentlichen demjenigen, wie er in Figur 4 dargestellt ist.

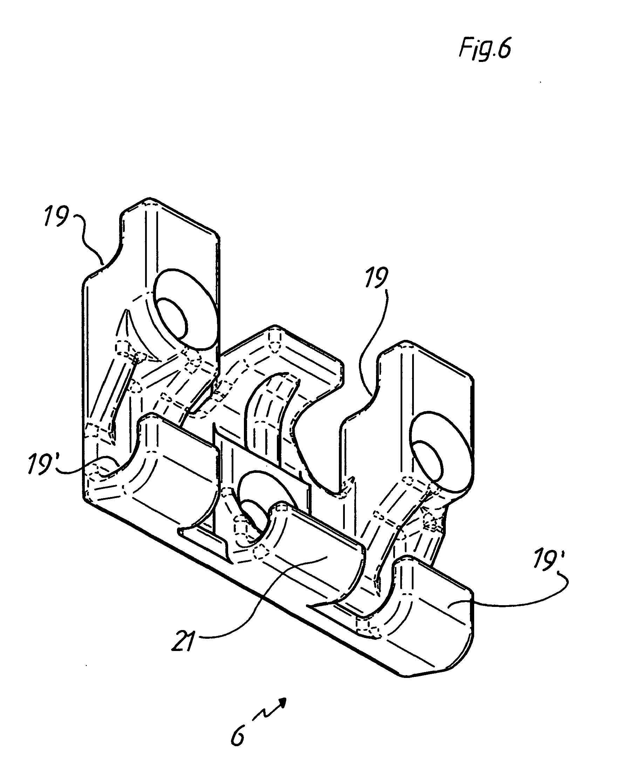

Figur 6 zeigt das Rungenlager 6 in räumlicher Darstellung. Erkennbar ist der obere Verriegelungsbereich 19, der untere Verrieglungsbereich 19' für die hier nicht dargestellten Verriegelungsbolzen sowie der Stützbereich 21 zur Aufnahme des Öffnungs-/Schließbolzens 15, respektive des Parkbolzens 15", (hier nicht dargestellt) des Handhebels 7.

### Bezugszeichenliste

- 1: Runge
- 2: Rungenprofil
- 3: erhabener Bereich
- 4: vertiefter Bereich
- 5: Rahmenbereich
- 6: Rungenlager
- 7: Handhebel
- 8: Kniehebel
- 9: Bolzen
- 10: Bolzen
- 11: unterer Bereich Rungenprofil
- 12: Verriegelungsbolzen
- 13: Verriegelungsbolzen
- 14: Handgriff
- 15: freies unteres Ende
- 15': Öffnungs-/Schließbolzen
- 15": Parkbolzen
- 16: Profilverstärkung
- 17: Schraube
- 18: unterer Lagerbereich
- 19: oberer Verriegelungsbereich
- 19': unterer Verrieglungsbereich
- 20: Sicherungselement
- 21: Stützbereich

## Patentansprüche

1. Einrichtung zum Festlegen einer, insbesondere verschiebbar ausgebildeten, Runge (1) im Bereich eines Nutzfahrzeugaufbaus, zumindest beinhaltend ein Rungenprofil (2), eine, insbesondere als Handhebel ausgebildete, Verstelleinrichtung (7), die über einen Kniehebel (8) mit dem Rungenprofil (2), respektive einer damit verbundenen Profilverstärkung (16) in Wirkverbindung steht sowie ein am Rahmenbereich (5) des Nutzfahrzeugaufbaus befestigtes Rungenlager (6), im Bereich dessen ein freies Ende (15) der Verstelleinrichtung (7) zur Erzeugung unterschiedlicher Hubstellungen der Runge (1) in unterschiedlichen Positionen (15',15") einbringbar ist.

2. Einrichtung nach Anspruch 1, **dadurch gekennzeichnet, dass** das Rungenlager (6) am unteren Rahmen (5) des Nutzfahrzeugaufbaus über Schrauben (17) befestigt ist.

3. Einrichtung nach Anspruch 1 oder 2, **dadurch gekennzeichnet, dass** das freie untere Ende (15) der Verstelleinrichtung (7) nach Art eines Knipphebels in unterschiedlichen Positionen (15',15") im Bereich eines rungenlagerseitig vorgesehenen Stützbereiches (21) einsetzbar ist, wobei ein Verschwenken der Verstelleinrichtung (7) in Richtung des Rungenprofils (2), respektive der Profilverstärkung (16), über den Kniehebel (8) ein Anheben/Absenken der Runge (1) relativ zum Rungenlager (6) bewirkt.

4. Einrichtung nach einem der Ansprüche 1 bis 3, **dadurch gekennzeichnet, dass** das Rungenprofil (2), respektive die Profilverstärkung (16), im Querschnitt etwa M-förmig ausgebildet ist.

5. Einrichtung nach einem der Ansprüche 1 bis 4, **dadurch gekennzeichnet, dass** das Rungenprofil (2), respektive die Profilverstärkung (16), rungenlagerseitig über mindestens einen oberen (12) und mindestens einen unteren Verriegelungsbolzen (13) verfügt.

6. Einrichtung nach einem der Ansprüche 1 bis 5, **dadurch gekennzeichnet, dass** der obere Verriegelungsbolzen (12) sich im Wesentlichen über die Breite des Rungenlagers (6) erstreckt.

7. Einrichtung nach einem der Ansprüche 1 bis 6, **dadurch gekennzeichnet, dass** bei Verwendung eines im Querschnitt M-förmig ausgebildeten Rungenprofils (2), respektive einer im Querschnitt M-förmig ausgebildeten Profilverstärkung (16), im unteren Bereich (11) rungenlagerseitig zwei im erhabenen Bereich (3) des Rungenprofils (2), respektive der Profilverstärkung (16), nebeneinander positionierte Verriegelungsbolzen (13) vorgesehen sind.

8. Einrichtung nach einem der Ansprüche 1 bis 7, **dadurch gekennzeichnet, dass** die Verstelleinrichtung (7) im Bereich ihrer Erstreckung ein Sicherungselement (20) aufweist, das im verriegelten Zustand der Runge (1) mit einem entsprechend ausgebildeten, am Rungenprofil (2), respektive der Profilverstärkung (16) vorgesehenen Gegenstück (9) in Wirkverbindung steht.

9. Einrichtung nach einem der Ansprüche 1 bis 8, **dadurch gekennzeichnet, dass** das Gegenstück (9) durch den Bolzen des am Rungenprofil (2), respektive der Profilverstärkung (16) angelenkten Kniehebels (8) gebildet ist, wobei das etwa klammerartig ausgebildete Sicherungselement (20) auf den Bolzen (9) aufgesteckt ist.

10. Einrichtung nach einem der Ansprüche 1 bis 9, **dadurch gekennzeichnet, dass** im freien unteren Bereich (15) der Verstelleinrichtung (7) beabstandete Offnungs-/Schließbolzen (15') und Parkbolzen (15") vorgesehen sind, die zur Erzeugung der unterschiedlichen Hubpositionen der Runge (1) wahlweise mit dem rungenlagerseitig vorgesehenen Stützbereich (21) in Wirkverbindung bringbar sind.
